# EUROPEAN PATENT SPECIFICATION

(11) **EP 3 493 200 B1**
(45) Date of publication and mention of the grant of the patent: **26.07.2023**
(21) Application number: 17204623.7
(22) Date of filing: 30.11.2017
(51) Int. Cl.: G10L 15/22

(54) **VOICE-CONTROLLABLE DEVICE AND METHOD OF VOICE CONTROL**
SPRACHSTEUERBARE VORRICHTUNG UND VERFAHREN ZUR SPRACHSTEUERUNG
DISPOSITIF CONTRÔLABLE PAR LA VOIX ET PROCÉDÉ DE COMMANDE VOCALE

(43) Date of publication of application: 05.06.2019
(73) Proprietor: Vestel Elektronik Sanayi ve Ticaret A.S., 45030 Manisa (TR)
(72) Inventor: ÇUBUKÇU, Baran, 45030 Manisa (TR)
(74) Representative: Flint, Adam

(56) References cited:
- US-A1- 2014 039 888
- US-A1- 2017 076 720
- US-B1- 9 693 164

## Description

### Technical Field

The present disclosure relates to a voice-controllable device and a method of voice control of a voice-controllable device.

### Background

Voice-controllable devices, including for example smart home systems such as Google Home and Alexa by Amazon, are controllable by a user's voice. That is, a voice-controllable device has a microphone that receives sound and then processes the received sound to determine whether a command, spoken by a user, is included in the received sound. The command may be, for example, a request for weather or traffic information, a request to play music or to set an alarm. Sometimes a voice command is not processed correctly or is missed entirely. This can be frustrating for the user of the voice-controllable device if the user has to repeat the command or alter an incorrectly processed command.

US2017076720A1 discloses architectures and techniques for selecting a voice-enabled device to handle audio input that is detected by multiple voice-enabled devices are described herein. Multiple voice-enabled devices may detect audio input from a user at substantially the same time, due to the voice-enabled devices being located within proximity to the user. The described architectures and techniques analyse a variety of audio signal metric values for the voice-enabled devices to designate a voice-enabled device to handle the audio input.

US2014039888A1 discloses performing speech recognition using models that are based on where, within a building, a speaker makes an utterance. The disclosed methods, systems, and apparatus include actions of receiving data corresponding to an utterance, and obtaining location indicia for an area within a building where the utterance was spoken.

US9693164B1 discloses determining a direction of a networked microphone device relative to an audio playback device. A playback device is caused to adjust calibration based on the identified direction of the networked microphone device.

### Summary

According to a first aspect disclosed herein, there is provided a method carried out by a voice-controllable device, the method comprising: determining a value of a first attribute at the voice-controllable device; and determining a value of the same attribute at a user device; characterised by: if the value of the attribute at the user device differs from the value of the same attribute at the voice-controllable device by more than a threshold, then transmitting an instruction to the user device to place the user device in a receiving mode such that the user device is configured to receive voice commands and to relay the voice commands to the voice-controllable device.

In an example, the attribute is a received wireless signal strength at the respective device.

In an example, the attribute is a measure of background noise at the respective device.

In an example, the method wherein a voice command is received at both the voice-controllable device and the user device; and the method comprises: transmitting an instruction to the user device to place the user device in the receiving mode if (i) the value of the attribute at the voice-controllable device and the value of the attribute at the user device differ by less than a threshold and (ii) the voice command is incorrectly understood at the voice-controllable device.

In an example, the method comprises: determining a value of a second attribute at the voice-controllable device; determining a value of the same second attribute at a user device; and if both the values of the first and second attributes at the user device and the respective values of the first and second attributes at the voice-controllable device differ by more than respective thresholds, then transmitting an instruction to the user device to place the user device in the receiving mode such that the user device is configured to receive voice commands and to relay the voice commands to the voice-controllable device, wherein the first attribute is a received wireless signal strength and the second attribute is a measure of background noise.

In an example, the method comprises: determining a value of a second attribute at the voice-controllable device; determining a value of the same second attribute at the user device; and if a weighted sum of the values of the first and second attributes at the user device and a weighted sum of the respective values of the first and second attributes at the voice-controllable device differ by more than respective thresholds, then transmitting an instruction to the user device to place the user device in the receiving mode such that the user device is configured to receive voice commands and to relay the voice commands to the voice-controllable device, wherein the first attribute is a received wireless signal strength and the second attribute is a measure of background noise.

In an example, the method wherein a voice command received at the user device is converted into text format, wherein the voice commands are relayed to the voice-controllable device from the user device to the voice-controllable device in text format.

According to a second aspect disclosed herein, there is provided a computer program comprising instructions such that when the computer program is executed on a computing device, the computing device is arranged to carry out a method as described above.

According to a third aspect disclosed herein, there is provided a voice-controllable device constructed and arranged to receive voice commands, the device being configured to: determine a value of an attribute at the voice-controllable device; and determine a value of the same attribute at a user device; characterised by the device being configured to: transmit an instruction to the user device to cause the user device to be placed in a receiving mode such that the user device is configured to receive voice commands and to relay the voice commands to the voice-controllable device if the value of the attribute at the user device and the value of the same attribute at the voice-controllable device differ by more than a threshold.

In an example, the voice-controllable device is configured such that the attribute is a received wireless signal strength at the respective device.

In an example, the voice-controllable device is configured such that the attribute is a measure of background noise at the respective device.

In an example, the voice-controllable device is configured to: transmit an instruction to a said user device to process a voice command received at the voice-controllable device; and to cause the user device to be placed in the receiving mode if (i) the value of the attribute at the voice-controllable device and the value of the attribute at the user device differ by less than a threshold and (ii) the voice command is incorrectly understood at the voice-controllable device;

In an example, if the voice command is incorrectly understood at the voice-controllable device, then the user device is maintained in the receiving mode.

In an example, the voice-controllable device is configured to: determine a value of a second attribute at the voice-controllable device; determine a value of the same second attribute at a said user device; and transmit an instruction to the user device to cause the user device to be placed in a receiving mode if both the values of the first and second attributes at the user device and the respective values of the first and second attributes at the voice-controllable device differ by more than respective thresholds such that the user device is configured to receive voice commands and to relay the voice commands to the voice-controllable device, wherein the first attribute is a received wireless signal strength and the second attribute is a measure of background noise.

In an example, the voice-controllable device is configured to: determine a value of a second attribute at the voice-controllable device; determine a value of the same second attribute at the user device; and transmit an instruction to the user device to cause the user device to be placed in a receiving mode if a weighted sum of the values of the first and second attributes at the user device and a weighted sum of the respective values of the first and second attributes at the voice-controllable device differ by more than respective thresholds such that the user device is configured to receive voice commands and to relay the voice commands to the voice-controllable device, wherein the first attribute is a received wireless signal strength and the second attribute is a measure of background noise.

In an example, the voice-controllable device is configured to receive a voice command from a said user device in text format.

### Brief Description of the Drawings

To assist understanding of the present disclosure and to show how embodiments may be put into effect, reference is made by way of example to the accompanying drawings in which:
Figure 1 shows schematically an example environment in which a user device can be used for voice-control of a voice-controllable device; and
Figure 2 shows schematically an example control system for voice-control of a voice-controllable device.

### Detailed Description

Voice-controllable devices include so-called "smart devices" with intelligent personal assistants. Voice-controllable devices are capable of one or two-way voice interaction with a user of the device, and may even interact with other connected devices. To interact with a voice-controllable device, a user typically says a wake-up word or command, such as "Hey Siri", "Hello Alexa", etc. The user can then issue a voice command for the device to perform actions such as, for example, provide weather and sports reports, play music, manage alarms, timers and to-do lists, etc.

Sometimes, if a user is relatively far away from the voice-controllable device when issuing a voice command, or if, for example, the user is in a different room compared to the device, the voice-controllable device may not be able to hear or process the voice command. For example, the device's microphone may not hear the voice command at all. In another example, the device may only hear part of the voice command and therefore cannot correctly process the command.

Furthermore, the voice-controllable device may not hear or correctly interpret the command if the device is positioned in a relatively noisy environment. For example, the device may be positioned near to a music source, or indeed may be playing music through the device's own speakers, such that a received voice command becomes unintelligible against the background noise.

The problem of missed or misinterpreted voice commands is compounded if the user is far from the voice-controllable device and the device is positioned in a noisy environment.

Missed, misinterpreted or incorrectly processed voice commands can lead to undesirable effects which can be frustrating for the user. For example, a user may issues a voice command for the voice-controllable device to set an alert to remind the user of an important event in the future. At best, the voice command is misinterpreted and the date, time, or event is incorrectly recorded. This is frustrating for the user who has to delete or edit the first command and issue a new command. At worst, the voice command is missed entirely and the user is not made aware of the missed request, leading to the possibility of the user missing the important event.

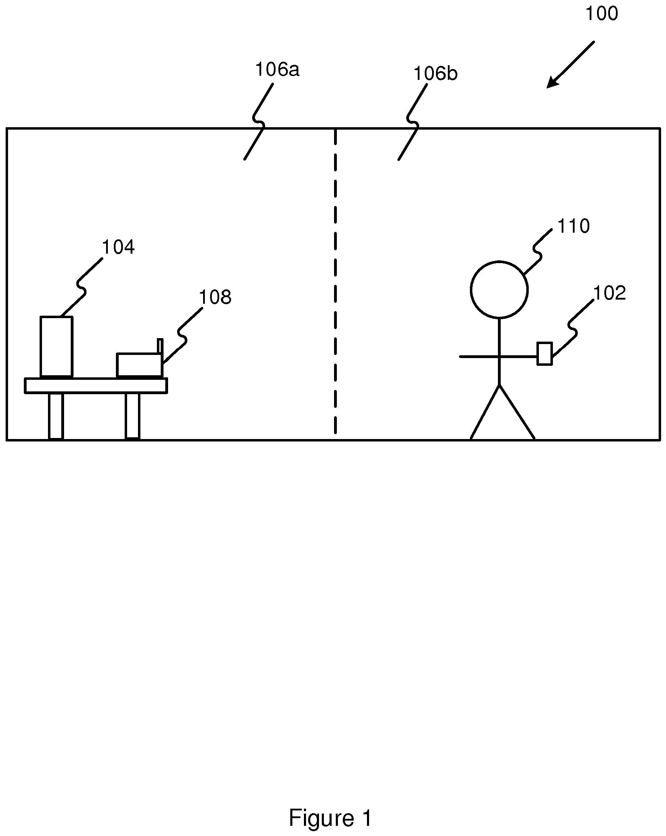

Figure 1 shows schematically an example environment 100 in which a user device 102 can be used for voice control of a voice-controllable device 104. The environment 100 may, for example, take the form of an indoor space such as one or more rooms of a home, office or other building, such as a library, campus, or stadium. As shown by the dashed line in Figure 1, the environment may be split into a plurality of zones or sections 106a, 106b, such as different rooms of a home, or multiple offices, hallways, reception or canteen area of an office building.

The environment 100 contains a voice-controllable device 104. The voice-controllable device 104 may be any device that is controllable by voice commands. Examples of a voice-controllable device 104 include Amazon Echo^{™}, Amazon Dot^{™}, Google Home^{™}, etc. A voice-controllable device 104 typically utilizes an intelligent personal assistant. Examples of intelligent personal assistants include, Alexa^{™}, Siri^{™}, and Google Now^{™}. Other voice-controllable devices other than intelligent personal assistants are also well known.

The environment 100 also contains a user device 102. The user device 102 may be a different device from the voice-controllable device 104. The user device 102 may include in general any device capable of connecting wirelessly to a network, and includes in particular mobile devices including mobile or cell phones (including so-called "smart phones"), personal digital assistants, pagers, tablet and laptop computers and wearable communication devices (including so-called "smart watches"). Here, a smart phone is a mobile (cellular) phone with an operating system and an integrated mobile broadband cellular network connection for voice and data communication. A smart phone typically enables the user to have Internet access and typically includes a Web browser and one or more of Wi-Fi connectivity and Bluetooth connectivity.

The environment 100 may also contain a wireless router 108. A wireless router 108 may be any device that functions as router and a wireless access point to provide access to the internet or a private network. For example, the wireless router 108 may provide access to a local area network (LAN) and/or a wireless local area network (WLAN) within the environment. That is, the wireless router 108 may provide the voice-controllable device 104 and/or the user device 102 with access to a LAN and/or a WLAN. For example, the user device 102 and the voice-controllable device 104 may be connected via a Wi-Fi connection.

The user device 102, the voice-controllable device 104 and the wireless router 108 may be located in the same zone 106 within the environment 100, e.g. all in the same room. Alternatively, the user device 102 and the voice-controllable device 104 may be located in different zones 106a, 106b within the environment 100, e.g. in different rooms. In this example, the wireless router 108 may be located in the same zone 106b as the user device 102, or the same zone 106a as the voice-controllable device 104, or even in a different zone 106. In yet another example, the user device 102 and the voice-controllable device 104 may be located within the same zone 106a, whilst the wireless router 108 is located in a different zone 106.

As shown in Figure 1, a user 110 of the voice-controllable device 104 and the user device 102 may be located in the same zone 106b as the user device 102. Alternatively, the user 110 may be located in the same zone 106 as the voice-controllable device 104, or the same zone 106 as both the user device 102 and the voice-controllable device. Alternatively, the user 110 may be located in a different zone 106 from both the user device 102 and the voice-controllable device 104.

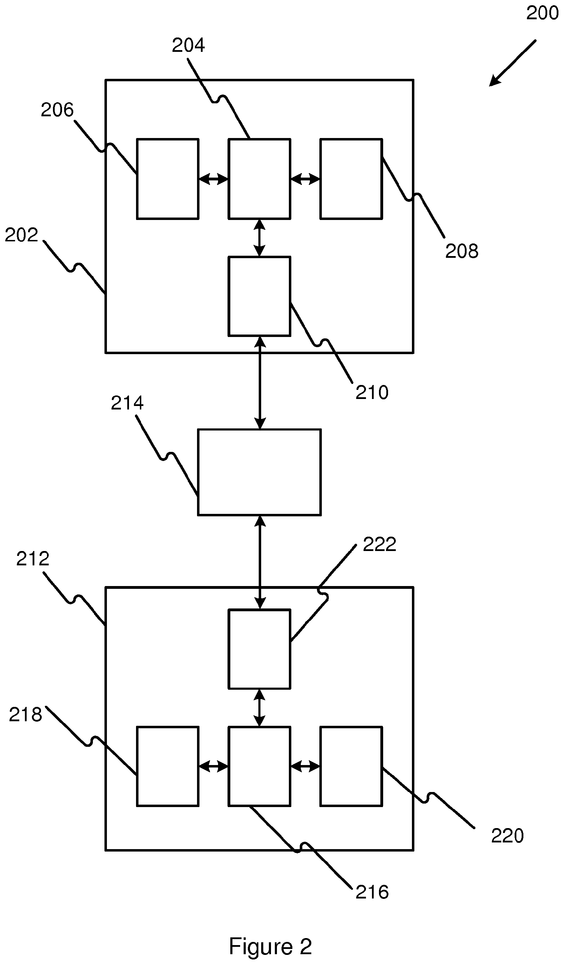

Figure 2 shows an example control system 200 for voice-control of a voice-controllable device 202. The voice-controllable device 202 has a controller 204, such as a processor, operatively coupled to a user interface 206 and at least one microphone 208 of the voice-controllable device 202. The user interface 206 may be for example a display in the form of a screen for receiving inputs from the user. For example, the user interface 206 may comprise a touch screen, or a point-and-click user interface 206 comprising a mouse, track pad, or tracker ball or the like. The user interface 206 is configured to receive inputs from a user of the voice-controllable device 202.

The controller 204 is also operatively coupled to a wireless transceiver 210 for communicating via any suitable wireless medium, e.g. a radio transceiver for communicating via a radio channel (though other forms are not excluded, e.g. an infrared transceiver). The wireless transceiver 210 may comprise a Wi-Fi, Bluetooth, etc. interface for enabling the voice-controllable device 202 to communicate wirelessly with a user device 212. Additionally or alternatively, the wireless transceiver 210 may communicate with a user device 212 via a wireless router 214 or a server (not shown), for example, over a local area network such as a WLAN or a wide area network such as the internet.

Similarly, the user device 212 has a controller 216, such as a processor, operatively coupled to a user interface 218 and at least one microphone 220 of the user device 212. The user interface 218 may be for example a display in the form of a screen for receiving inputs from the user. For example, the user interface 218 may comprise a touch screen, or a point-and-click user interface 206 comprising a mouse, track pad, or tracker ball or the like. The user interface 218 is configured to receive inputs from a user of the user device 212.

The controller 216 is also operatively coupled to a wireless transceiver 222 for communicating via any suitable wireless medium, e.g. a radio transceiver for communicating via a radio channel (though other forms are not excluded, e.g. an infrared transceiver). The wireless transceiver 222 may comprise a Wi-Fi, Bluetooth, etc. interface for enabling the user device 212 to communicate wirelessly with a voice-controllable device 202. Additionally or alternatively, the wireless transceiver 222 may communicate with a voice-controllable device 202 via the wireless router 214 or a server (not shown), for example, over a local area network such as a WLAN or a wide area network such as the internet.

In examples described herein, a value of a first attribute of a voice-controllable device 104 is determined and a value of the same attribute of a user device 102 is determined. If the value of the attribute of the user device 102 and the value of the same attribute of the voice-controllable device 104 differ by more than a threshold, then the user device 102 is placed in a receiving mode such that the user device 102 is configured to receive voice commands and to relay the voice commands to the voice-controllable device 104.

That is, the user device 102 may act as an additional receiver (e.g. microphone) of the voice-controllable device 104 for receiving voice commands issued by a user 110. For example, if the user device 102 is located in a position more suited to receiving voice commands from the user 110, the voice commands may be received at the user device 102 where they are more likely to be captured more cleanly (i.e. more clearly, with for example a greater amplitude and/or less noise) before being relayed to the voice-controllable device 104 to action the command.

In examples, the voice commands may be relayed to the voice-controllable device 104 from the user device 102 over a wireless connection. For example, the wireless connection may be a Wi-Fi connection or a Bluetooth connection.

In examples, the user device 102 may be the user's last used user device, e.g. the user's last used mobile device or smart phone. That is, it is the user device 102 that was used by the user most recently in time, e.g. to perform a phone a call, to browse the internet, etc. The user's last used user device may be connected to the same network in the environment as the voice-controllable device 104.

In examples, the attribute may be determined continuously or periodically for the user device 102 and/or the voice-controllable device 104. For example, the attribute may be determined continuously for the voice-controllable device 104 and periodically for the user device 102. This may advantageously save battery resources of the user device 102 which may not be connected to a permanent or mains power supply.

In examples, the threshold may be changed by a user of the voice-controllable device 104. Additionally or alternatively, the threshold may be pre-determined by a manufacturer of the voice-controllable device 104. In some examples, the threshold may be zero.

In examples, the attribute is a received wireless signal strength at the respective device. That is, the strength of a wireless signal received at the user device 102 and the voice-controllable device 104 from a wireless router 108 or alternative source of wireless signals is determined.

For example, if the user device has a received signal strength of 40% and the voice-controllable device 104 has a received signal strength of 95%, the voice-controllable device 104 may determine that the distance between the user device and e.g. the wireless router 108 is greater than the distance between the voice-controllable device 104 and the wireless router 108. The user 110 is presumed to be near to the user device 102 and therefore nearer to the user device 102 than to the voice-controllable device 104.

In examples, if the received wireless signal strength at the user device 102 (e.g. 40%) and the received wireless signal strength at the voice-controllable device 104 (e.g. 95%) differ by more than a threshold (e.g. 30%), the user device 102 is placed in the receiving mode. The threshold may be more than or less than 30%, e.g. 10%, 20%, 40%, 50%, and so on.

In other examples, the attribute is a measure of background noise at the respective device. That is, a background noise measurement is determined at the user device 102 and at the voice-controllable device 104.

For example, the background noise may be measured in decibels (dB). If the user device 102 has a background noise measurement of e.g. 40 dB corresponding to, for example, a quiet room and the voice-controllable device 104 has a background noise measurement of e.g. 70 dB corresponding to, for example, a vacuum cleaner, the voice-controllable device 104 may determine that the user device 102 is in an environment more likely to allow for clear voice commands.

In examples, if the measure of background noise at the user device 102 (e.g. 40 dB) and the measure of background noise at the voice-controllable device 104 (e.g. 70 dB) differ by more than a threshold (e.g. 20 dB), the user device 102 is placed in the receiving mode. The threshold may be more than or less than 20 dB, e.g. 5 dB, 10 dB, 15dB, 25dB, and so on. Alternatively, the threshold may be a percentage difference between the two values.

In examples, the voice-controllable device 104 receives a voice command. The user device 102 is placed in the receiving mode if the value of the attribute of the voice-controllable device 104 and the value of the attribute of the user device 102 differ by less than a threshold and if the voice command is not correctly processed by the voice-controllable device 104. For example, the received wireless signal strength may be the same (e.g. 40%) at both the user device 102 and the voice-controllable device 104. In one scenario, the user device 102 and voice-controllable device 104 may be at opposite ends of the environment 100 with the wireless router 108 placed in or near the middle of the environment 100. In a different example, the user device 102 may be placed in the receiving mode if the values differ by less than a threshold of 25%. For example, the measure of background noise at the user device 102 may be 50 dB and the measure of background noise at the voice-controllable device 104 may be 60 dB. In this example, the difference is 20% and therefore the user device is placed in the receiving mode.

Of course, the voice-controllable device 104 will usually attempt to process received voice command without causing the user device 102 to be placed in the receiving mode. However, if the voice command is not processed correctly at the voice-controllable device 104, the voice-controllable device 104 may require assistance from the user device 102.

In examples, a voice command is received at both the voice-controllable device 104 and the user device 102. If the voice command is correctly understood at the voice-controllable device 104, the user device 102 is stopped from being in the receiving mode. If the voice command is incorrectly understood at the voice-controllable device 104, the user device 102 is maintained in the receiving mode.

In examples, the voice command received at the user device 102 is transmitted to the voice-controllable device 104 in text format. The voice-controllable device 104 may compare the text format received from the user device 102 with the voice command received directly via the voice-controllable device's microphone 208. If the received commands (text format and voice format) do not match, the voice command is incorrectly understood and the user device 102 is maintained in the receiving mode.

That is, if the voice-controllable device 104 and the user device 102 have the same value of the attribute (or the values differ by less than a threshold), the voice-controllable device 104 may not be able to determine which device is closest to the user 110 or in the best position to receive voice commands. In this example, the user device 102 is placed in the receiving mode to ensure that a voice command is received if it is not correctly understood at the voice-controllable device 104. If the voice command is correctly understood at the voice-controllable device 104, the user device 102 can be stopped from being in the receiving mode, which can help save battery power.

In examples, a value of a second attribute of the voice-controllable device 104 is determined and a value of the same second attribute of the user device 102 is determined. If both the values of the first and second attributes of the user device 102 and the respective values of the first and second attributes of the voice-controllable device 104 differ by more than respective thresholds, then the user device 102 is placed in the receiving mode. In these examples, the first attribute is a received wireless signal strength and the second attribute is a measure of background noise.

That is, the user device 102 must have a weaker received wireless signal strength (e.g. indicating that the user device 102 was last used further away from the wireless router 108 than the voice-controllable device 104) and a lower measure of background noise in order to be placed in the receiving mode. If the user is determined to be closer to the user device 102 but in a noisy environment, the user device 102 may be in a less favourable position for receiving voice commands than the voice-controllable device 104.

In examples, the threshold(s) may be zero. In examples, the threshold(s) may be set by the user 110 or predetermined by the manufacturer.

As an example, the voice-controllable device has values of 80% and 30 dB for the first and second attributes respectively. If the user device 102 has values of 60% and 60 dB for the first and second attributes respectively, the user device 102 may not be placed in the receiving mode. In another example, if the user device 102 has values of 60% and 30 dB for the first and second attributes respectively, the user device 102 may be placed in the receiving mode.

In examples, the user device 102 may be placed in the receiving mode if a weighted sum of the values of the first and second attributes of the user device 102 and a weighted sum of the respective values of the first and second attributes of the voice-controllable device 104 differ by more than a threshold.

That is, a relative importance of the received wireless signal strength and the measure of background noise at the voice-controllable device 104 and user device 102 may be defined. For example, the user may decide that more weight should be given to the measure of background noise than the received wireless signal strength.

In examples, a voice command received at the user device 102 is converted into text format before being relayed to the voice-controllable device 104 in text format. Voice data typically requires more memory storage than text data and typically takes longer to transfer across a wireless connection. The voice-controllable device 104 may process the command in text format and take the commanded action.

In examples, the voice-controllable device 104 may determine the value of the attribute of the voice-controllable device 104 and the value of the same attribute of the user device 102. The voice-controllable device 104 may transmit an instruction (e.g. via a Wi-Fi or Bluetooth connection) to cause the user device 102 to be placed in the receiving mode such that the user device 102 is configured to receive voice commands and to relay the voice commands to the voice-controllable device 104 if the value of the attribute of the user device 102 and the value of the same attribute of the voice-controllable device 104 differ by more than a threshold.

For example, the instruction may cause the user device 102 to activate its microphone. In another example, the instruction may cause the user device 102 to receive and process voice commands in response to a specific keyword or phrase (e.g. "Hello Alexa").

In examples, the voice-controllable device 104 may process a voice-command received at the voice-controllable device 104. The voice-controllable device 104 may transmit an instruction to a said user device 102 to cause the user device 102 to be placed in the receiving mode if the value of the attribute of the voice-controllable device 104 and the value of the attribute of the user device 102 differ by less than a threshold and if the voice command is incorrectly understood at the voice-controllable device 104.

If the voice command is correctly understood at the voice-controllable device 104 in the first instance, the user device 102 may not be required to receive voice commands. In examples, if the voice command is incorrectly understood at the voice-controllable device 104, then the user device 102 is placed and maintained in the receiving mode.

In examples, the voice-controllable device 104 may determine the value of the attribute of the voice-controllable device 104 and the value of the same attribute of the user device 102. The voice-controllable device 104 may transmit an instruction to the user device 102 to cause the user device 102 to be placed in a receiving mode if both the values of the first and second attributes of the user device 102 and the respective values of the first and second attributes of the voice-controllable device 104 differ by more than a threshold. In these examples, the first attribute is a received wireless signal strength and the second attribute is a measure of background noise.

In examples, the voice-controllable device 104 may transmit an instruction to the user device 102 to cause the user device 102 to be placed in a receiving mode if a weighted sum of the values of the first and second attributes of the user device 102 and a weighted sum of the respective values of the first and second attributes of the voice-controllable device 104 differ by more than a threshold.

In examples, the voice-controllable device 104 may receive a voice command from a user device 102 in text format. The voice-controllable device 104 may then process the command in text format to action the command.

As an example, the voice-controllable device 104 may transmit an instruction to the user device 102 to listen to voice commands, e.g. starting with a keyword or phrase. Additionally or alternatively, the keyword or phrase may be entered manually at the user device 102. If an instruction is transmitted to the user device 102 to cause the user device 102 to be placed in the receiving mode and a voice command is received at the user device 102, the voice command may be transmitted to the voice-controllable device 104 (e.g. in sound or text format). The voice-controllable device 104 may receive the command and process its content to action the command. If the voice-controllable device 104 determines that it can correctly understand voice commands, it may transmit an instruction to the user device 102 to cause it to no longer be in the receiving mode. The instructions may be transmitted by Wi-Fi (e.g. via the wireless router 108), by Bluetooth or via any other wireless connection.

The controller and its components as shown in Figure 2 are represented as a schematic block diagram for the purposes of explaining the functionality of the controller only. Hence, it is understood that each component of the controller is a functional block for performing the functionality ascribed to it herein. Each component may be implemented in hardware, software, firmware, or a combination thereof. Additionally, although described as separate components of the controller, some or all of the functionality may be performed by a single piece of hardware, software, or firmware.

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. The scope of the invention is as defined in the following claims.

## Claims

1. A method carried out by a voice-controllable device (104), the method comprising:
determining a value of a first attribute at the voice-controllable device (104); and
determining a value of the same attribute at a user device (102);
**characterised by**:
if the value of the attribute at the user device (102) and the value of the same attribute at the voice-controllable device (104) differ by more than a threshold, then transmitting an instruction to the user device (102) to place the user device (102) in a receiving mode such that the user device (102) is configured to receive voice commands and to relay the voice commands to the voice-controllable device (104).

2. A method according to claim 1, wherein the attribute is a received wireless signal strength at the respective device.

3. A method according to claim 1, wherein the attribute is a measure of background noise at the respective device.

4. A method according to any of claims 1 to 3, wherein a voice command is received at both the voice-controllable device (104) and the user device (102); and the method comprises:
transmitting an instruction to the user device (102) to place the user device (102) in the receiving mode if (i) the value of the attribute at the voice-controllable device (104) and the value of the attribute at the user device (102) differ by less than a threshold and (ii) the voice command is incorrectly understood at the voice-controllable device (104).

5. A method according to claim 1, comprising:
determining a value of a second attribute at the voice-controllable device (104);
determining a value of the same second attribute at a user device (102); and
if both the values of the first and second attributes at the user device (102) and the respective values of the first and second attributes at the voice-controllable device (104) differ by more than respective thresholds, then transmitting an instruction to the user device (102) to place the user device (102) in the receiving mode such that the user device (102) is configured to receive voice commands and to relay the voice commands to the voice-controllable device (104),
wherein the first attribute is a received wireless signal strength and the second attribute is a measure of background noise.

6. A method according to claim 1, comprising:
determining a value of a second attribute at the voice-controllable device (104);
determining a value of the same second attribute at the user device (102); and
if a weighted sum of the values of the first and second attributes at the user device (102) and a weighted sum of the respective values of the first and second attributes at the voice-controllable device (104) differ by more than respective thresholds, then transmitting an instruction to the user device (102) to place the user device (102) in the receiving mode such that the user device (102) is configured to receive voice commands and to relay the voice commands to the voice-controllable device (104),
wherein the first attribute is a received wireless signal strength and the second attribute is a measure of background noise.

7. A method according to any of claims 1 to 6, wherein a voice command received at the user device (102) is converted into text format, wherein the voice commands are relayed to the voice-controllable device (104) from the user device (102) to the voice-controllable device (104) in text format.

8. A computer program comprising instructions such that when the computer program is executed on a computing device, the computing device is arranged to carry out a method according to any of claims 1 to 7.

9. A voice-controllable device (104) constructed and arranged to receive voice commands, the device being configured to:
determine a value of an attribute at the voice-controllable device (104); and
determine a value of the same attribute at a user device (102);
**characterised by** the device being (104) configured to:
transmit an instruction to the user device (102) to cause the user device (102) to be placed in a receiving mode such that the user device (102) is configured to receive voice commands and to relay the voice commands to the voice-controllable device (104) if the value of the attribute at the user device (102) and the value of the same attribute at the voice-controllable device (104) differ by more than a threshold.

10. A voice-controllable device (104) according to claim 9, configured such that the attribute is a received wireless signal strength at the respective device.

11. A voice-controllable device (104) according to claim 9, configured such that the attribute is a measure of background noise at the respective device.

12. A voice-controllable device (104) according to any of claims 9 to 11, the voice-controllable device (104) being configured to:
process a voice command received at the voice-controllable device (104); and
transmit an instruction to a said user device (102) to cause the user device (102) to be placed in the receiving mode if (i) the value of the attribute at the voice-controllable device (104) and the value of the attribute at the user device (102) differ by less than a threshold and (ii) the voice command is incorrectly understood at the voice-controllable device (104).

13. A voice-controllable device (104) according to claim 9, the voice-controllable device (104) being configured to:
determine a value of a second attribute at the voice-controllable device (104);
determine a value of the same second attribute at a said user device (102); and
transmit an instruction to the user device (102) to cause the user device (102) to be placed in a receiving mode if both the values of the first and second attributes at the user device (102) and the respective values of the first and second attributes at the voice-controllable device (104) differ by more than respective thresholds such that the user device (102) is configured to receive voice commands and to relay the voice commands to the voice-controllable device (104),
wherein the first attribute is a received wireless signal strength and the second attribute is a measure of background noise.

14. A voice-controllable device (104) according to claim 9, the voice-controllable device (104) being configured to:
determine a value of a second attribute at the voice-controllable device (104);
determine a value of the same second attribute at the user device (102); and
transmit an instruction to the user device (102) to cause the user device (102) to be placed in a receiving mode if a weighted sum of the values of the first and second attributes at the user device (102) and a weighted sum of the respective values of the first and second attributes at the voice-controllable device (104) differ by more than respective thresholds such that the user device (102) is configured to receive voice commands and to relay the voice commands to the voice-controllable device (104),
wherein the first attribute is a received wireless signal strength and the second attribute is a measure of background noise.

15. A voice-controllable device (104) according to any of claims 9 to 14, the voice-controllable device (104) being configured to receive a voice command from a said user device (102) in text format.

## Patentansprüche

1. Verfahren, das von einem sprachsteuerbaren Gerät (104) ausgeführt wird, wobei das Verfahren aufweist:
Bestimmen eines Wertes eines ersten Attributs am sprachsteuerbaren Gerät (104); und
Bestimmen eines Wertes desselben Attributs an einem Benutzergerät (102);
**gekennzeichnet durch**:
wenn sich der Wert des Attributs am Benutzergerät (102) und der Wert desselben Attributs am sprachsteuerbaren Gerät (104) um mehr als einen Schwellenwert unterscheiden, dann Senden einer Anweisung an das Benutzergerät (102), um das Benutzergerät (102) in einen Empfangsmodus zu versetzen, sodass das Benutzergerät (102) konfiguriert ist, um Sprachbefehle zu empfangen und die Sprachbefehle an das sprachsteuerbare Gerät (104) weiterzuleiten.

2. Verfahren nach Anspruch 1, wobei das Attribut eine empfangene drahtlose Signalstärke am jeweiligen Gerät ist.

3. Verfahren nach Anspruch 1, wobei das Attribut ein Maß für das Hintergrundrauschen am jeweiligen Gerät ist.

4. Verfahren nach einem der Ansprüche 1 bis 3, wobei ein Sprachbefehl sowohl am sprachsteuerbaren Gerät (104) als auch am Benutzergerät (102) empfangen wird;
und das Verfahren aufweist:
Senden einer Anweisung an das Benutzergerät (102), um das Benutzergerät (102) in den Empfangsmodus zu versetzen, wenn (i) sich der Wert des Attributs am sprachsteuerbaren Gerät (104) und der Wert des Attributs am Benutzergerät (102) um weniger als einen Schwellenwert unterscheiden und (ii) der Sprachbefehl am sprachsteuerbaren Gerät (104) falsch verstanden wird.

5. Verfahren nach Anspruch 1, aufweisend:
Bestimmen eines Wertes eines zweiten Attributs am sprachsteuerbaren Gerät (104);
Bestimmen eines Wertes desselben zweiten Attributs an einem Benutzergerät (102); und
wenn sich sowohl die Werte der ersten und zweiten Attribute am Benutzergerät (102) als auch die jeweiligen Werte der ersten und zweiten Attribute am sprachsteuerbaren Gerät (104) sich um mehr als jeweilige Schwellenwerte unterscheiden, dann Senden einer Anweisung an das Benutzergerät (102), um das Benutzergerät (102) in den Empfangsmodus zu versetzen, sodass das Benutzergerät (102) konfiguriert ist, um Sprachbefehle zu empfangen und die Sprachbefehle an das sprachsteuerbare Gerät (104) weiterzuleiten,
wobei das erste Attribut eine empfangene drahtlose Signalstärke ist und das zweite Attribut ein Maß für Hintergrundrauschen ist.

6. Verfahren nach Anspruch 1, aufweisend:
Bestimmen eines Wertes eines zweiten Attributs am sprachsteuerbaren Gerät (104);
Bestimmen eines Wertes desselben zweiten Attributs am Benutzergerät (102); und
wenn sich eine gewichtete Summe der Werte der ersten und zweiten Attribute am Benutzergerät (102) und eine gewichtete Summe der jeweiligen Werte der ersten und zweiten Attribute am sprachsteuerbaren Gerät (104) um mehr als jeweilige Schwellenwerte unterscheiden, dann Senden einer Anweisung an das Benutzergerät (102), um das Benutzergerät (102) in den Empfangsmodus zu versetzen, sodass das Benutzergerät (102) konfiguriert ist, um Sprachbefehle zu empfangen und die Sprachbefehle an das sprachsteuerbare Gerät (104) weiterzuleiten,
wobei das erste Attribut eine empfangene drahtlose Signalstärke ist und das zweite Attribut ein Maß für Hintergrundrauschen ist.

7. Verfahren nach einem der Ansprüche 1 bis 6, wobei ein am Benutzergerät (102) empfangener Sprachbefehl in ein Textformat umgewandelt wird, wobei die Sprachbefehle an das sprachsteuerbare Gerät (104) vom Benutzergerät (102) im Textformat an das sprachsteuerbare Gerät (104) weitergeleitet werden.

8. Computerprogramm, das Anweisungen aufweist, sodass, wenn das Computerprogramm auf einem Computergerät ausgeführt wird, das Computergerät eingerichtet ist, um ein Verfahren nach einem der Ansprüche 1 bis 7 auszuführen.

9. Sprachsteuerbares Gerät (104), das konstruiert und angeordnet ist, um Sprachbefehle zu empfangen, wobei das Gerät konfiguriert ist zum:
Bestimmen eines Wertes eines Attributs am sprachsteuerbaren Gerät (104); und
Bestimmen eines Wertes desselben Attributs an einem Benutzergerät (102);
**dadurch gekennzeichnet, dass** das Gerät (104) konfiguriert ist zum:
Senden einer Anweisung an das Benutzergerät (102), um zu bewirken, dass das Benutzergerät (102) in einen Empfangsmodus versetzt wird, sodass das Benutzergerät (102) konfiguriert ist, um Sprachbefehle zu empfangen und die Sprachbefehle an das sprachsteuerbare Gerät (104) weiterzuleiten, wenn sich der Wert des Attributs am Benutzergerät (102) und der Wert desselben Attributs am sprachsteuerbaren Gerät (104) um mehr als einen Schwellenwert unterscheiden.

10. Sprachsteuerbares Gerät (104) nach Anspruch 9, das so konfiguriert ist, dass das Attribut eine empfangene drahtlose Signalstärke am jeweiligen Gerät ist.

11. Sprachsteuerbares Gerät (104) nach Anspruch 9, das so konfiguriert ist, dass das Attribut ein Maß für das Hintergrundrauschen am jeweiligen Gerät ist.

12. Sprachsteuerbares Gerät (104) nach einem der Ansprüche 9 bis 11, wobei das sprachsteuerbare Gerät (104) konfiguriert ist zum:
Verarbeiten eines am sprachsteuerbaren Gerät (104) empfangenen Sprachbefehls; und
Senden einer Anweisung an das Benutzergerät (102), um zu bewirken, dass das Benutzergerät (102) in den Empfangsmodus versetzt wird, wenn (i) sich der Wert des Attributs am sprachsteuerbaren Gerät (104) und der Wert des Attributs am Benutzergerät (102) um weniger als einen Schwellenwert unterscheiden und (ii) der Sprachbefehl am sprachsteuerbaren Gerät (104) falsch verstanden wird.

13. Sprachsteuerbares Gerät (104) nach Anspruch 9, wobei das sprachsteuerbare Gerät (104) konfiguriert ist zum:
Bestimmen eines Wertes eines zweiten Attributs am sprachsteuerbaren Gerät (104);
Bestimmen eines Wertes desselben zweiten Attributs am Benutzergerät (102); und
Senden einer Anweisung an das Benutzergerät (102), um zu bewirken, dass das Benutzergerät (102) in einen Empfangsmodus versetzt wird, wenn sich sowohl die Werte der ersten und zweiten Attribute am Benutzergerät (102) als auch die jeweiligen Werte der ersten und zweiten Attribute am sprachsteuerbaren Gerät (104) um mehr als jeweilige Schwellenwerte unterscheiden, sodass das Benutzergerät (102) konfiguriert ist, Sprachbefehle zu empfangen und die Sprachbefehle an das sprachsteuerbare Gerät (104) weiterzuleiten,
wobei das erste Attribut eine empfangene drahtlose Signalstärke ist und das zweite Attribut ein Maß für Hintergrundrauschen ist.

14. Sprachsteuerbares Gerät (104) nach Anspruch 9, wobei das sprachsteuerbare Gerät (104) konfiguriert ist zum:
Bestimmen eines Wertes eines zweiten Attributs am sprachsteuerbaren Gerät (104);
Bestimmen eines Wertes desselben zweiten Attributs am Benutzergerät (102); und
Senden einer Anweisung an das Benutzergerät (102), um zu bewirken, dass das Benutzergerät (102) in einen Empfangsmodus versetzt wird, wenn sich eine gewichtete Summe der Werte der ersten und zweiten Attribute am Benutzergerät (102) und eine gewichtete Summe der jeweiligen Werte der ersten und zweiten Attribute am sprachsteuerbaren Gerät (104) um mehr als jeweilige Schwellenwerte unterscheiden, sodass das Benutzergerät (102) konfiguriert ist, um Sprachbefehle zu empfangen und die Sprachbefehle an das sprachsteuerbare Gerät (104) weiterzuleiten,
wobei das erste Attribut eine empfangene drahtlose Signalstärke ist und das zweite Attribut ein Maß für Hintergrundrauschen ist.

15. Sprachsteuerbares Gerät (104) nach einem der Ansprüche 9 bis 14, wobei das sprachsteuerbare Gerät (104) konfiguriert ist, um einen Sprachbefehl vom Benutzergerät (102) im Textformat zu empfangen.

## Revendications

1. Procédé effectué par un dispositif de commande vocale (104), le procédé consistant à :
déterminer une valeur d'un premier attribut au niveau du dispositif de commande vocale (104) ; et
déterminer une valeur du même attribut au niveau d'un dispositif d'utilisateur (102),
**caractérisé en ce que** :
si la valeur de l'attribut au niveau du dispositif d'utilisateur (102) et la valeur du même attribut au niveau du dispositif de commande vocale (104) ont une différence supérieure à un seuil, transmettre alors une instruction au dispositif d'utilisateur (102) pour placer le dispositif d'utilisateur (102) dans un mode de réception de sorte que le dispositif d'utilisateur (102) soit configuré pour recevoir des commandes vocales et pour relayer les commandes vocales au dispositif de commande vocale (104).

2. Procédé selon la revendication 1, dans lequel l'attribut est une intensité de signal sans fil reçu au niveau du dispositif respectif.

3. Procédé selon la revendication 1, dans lequel l'attribut est une mesure de bruit de fond au niveau du dispositif respectif.

4. Procédé selon l'une quelconque des revendications 1 à 3, dans lequel une commande vocale est reçue à la fois au niveau du dispositif de commande vocale (104) et au niveau du dispositif d'utilisateur (102), et le procédé consistant à :
transmettre une instruction au dispositif d'utilisateur (102) pour placer le dispositif d'utilisateur (102) dans le mode de réception si : (i) la valeur de l'attribut au niveau du dispositif de commande vocale (104) et la valeur de l'attribut au niveau du dispositif d'utilisateur (102) ont une différence inférieure à un seuil, et (ii) la commande vocale est mal comprise au niveau du dispositif de commande vocale (104).

5. Procédé selon la revendication 1, consistant à :
déterminer une valeur d'un deuxième attribut au niveau du dispositif de commande vocale (104) ;
déterminer une valeur du même deuxième attribut au niveau d'un dispositif d'utilisateur (102) ; et
si à la fois les valeurs des premier et deuxième attributs au niveau du dispositif d'utilisateur (102) et les valeurs respectives des premier et deuxième attributs au niveau du dispositif de commande vocale (104) ont une différence supérieure à des seuils respectifs, transmettre alors une instruction au dispositif d'utilisateur (102) pour placer le dispositif d'utilisateur (102) dans le mode de réception de sorte que le dispositif d'utilisateur (102) soit configuré pour recevoir des commandes vocales et pour relayer les commandes vocales au dispositif de commande vocale (104),
dans lequel le premier attribut est une intensité de signal sans fil reçu et le deuxième attribut est une mesure de bruit de fond.

6. Procédé selon la revendication 1, consistant à :
déterminer une valeur d'un deuxième attribut au niveau du dispositif de commande vocale (104) ;
déterminer une valeur du même deuxième attribut au niveau du dispositif d'utilisateur (102) ; et
si une somme pondérée des valeurs des premier et deuxième attributs au niveau du dispositif d'utilisateur (102) et une somme pondérée des valeurs respectives des premier et deuxième attributs au niveau du dispositif de commande vocale (104) ont une différence supérieure à des seuils respectifs, transmettre alors une instruction au dispositif d'utilisateur (102) pour placer le dispositif d'utilisateur (102) dans le mode de réception de sorte que le dispositif d'utilisateur (102) soit configuré pour recevoir des commandes vocales et pour relayer les commandes vocales au dispositif de commande vocale (104),
dans lequel le premier attribut est une intensité de signal sans fil reçu et le deuxième attribut est une mesure de bruit de fond.

7. Procédé selon l'une quelconque des revendications 1 à 6, dans lequel une commande vocale reçue au niveau du dispositif d'utilisateur (102) est convertie au format texte, les commandes vocales étant relayées au dispositif de commande vocale (104) depuis le dispositif d'utilisateur (102) jusqu'au dispositif de commande vocale (104) au format texte.

8. Programme informatique comprenant des instructions de sorte que, lorsque le programme informatique est exécuté sur un dispositif informatique, le dispositif informatique soit agencé pour effectuer un procédé selon l'une quelconque des revendications 1 à 7.

9. Dispositif de commande vocale (104) construit et agencé pour recevoir des commandes vocales, le dispositif étant configuré pour :
déterminer une valeur d'un attribut au niveau du dispositif de commande vocale (104) ; et
déterminer une valeur du même attribut au niveau d'un dispositif utilisateur (102),
**caractérisé par** le dispositif (104) étant configuré pour :
transmettre une instruction au dispositif d'utilisateur (102) pour permettre le placement du dispositif d'utilisateur (102) dans un mode de réception de sorte que le dispositif d'utilisateur (102) soit configuré pour recevoir des commandes vocales et pour relayer les commandes vocales au dispositif de commande vocale (104) si la valeur de l'attribut au niveau du dispositif d'utilisateur (102) et la valeur du même attribut au niveau du dispositif de commande vocale (104) ont une différence supérieure à un seuil.

10. Dispositif de commande vocale (104) selon la revendication 9, configuré de sorte que l'attribut soit une intensité de signal sans fil reçu au niveau du dispositif respectif.

11. Dispositif de commande vocale (104) selon la revendication 9, configuré de sorte que l'attribut soit une mesure de bruit de fond au niveau du dispositif respectif.

12. Dispositif de commande vocale (104) selon l'une quelconque des revendications 9 à 11, le dispositif de commande vocale (104) étant configuré pour :
traiter une commande vocale reçue au niveau du dispositif de commande vocale (104) ; et
transmettre une instruction audit dispositif d'utilisateur (102) pour permettre le placement du dispositif d'utilisateur (102) dans le mode de réception si : (i) la valeur de l'attribut au niveau du dispositif de commande vocale (104) et la valeur de l'attribut au niveau du dispositif d'utilisateur (102) ont une différence inférieure à un seuil, et (ii) la commande vocale est mal comprise au niveau du dispositif de commande vocale (104).

13. Dispositif de commande vocale (104) selon la revendication 9, le dispositif de commande vocale (104) étant configuré pour :
déterminer une valeur d'un deuxième attribut au niveau du dispositif de commande vocale (104) ;
déterminer une valeur du même deuxième attribut au niveau dudit dispositif d'utilisateur (102) ; et
transmettre une instruction au dispositif d'utilisateur (102) pour permettre le placement du dispositif d'utilisateur (102) dans un mode de réception si à la fois les valeurs des premier et deuxième attributs au niveau du dispositif d'utilisateur (102) et les valeurs respectives des premier et deuxième attributs au niveau du dispositif de commande vocale (104) ont une différence supérieure à des seuils respectifs de sorte que le dispositif d'utilisateur (102) soit configuré pour recevoir des commandes vocales et pour relayer les commandes vocales au dispositif de commande vocale (104),
dans lequel le premier attribut est une intensité de signal sans fil reçu et le deuxième attribut est une mesure de bruit de fond.

14. Dispositif de commande vocale (104) selon la revendication 9, le dispositif de commande vocale (104) étant configuré pour :
déterminer une valeur d'un deuxième attribut au niveau du dispositif de commande vocale (104) ;
déterminer une valeur du même deuxième attribut au niveau du dispositif d'utilisateur (102) ; et
transmettre une instruction au dispositif d'utilisateur (102) pour permettre le placement du dispositif d'utilisateur (102) dans un mode de réception si une somme pondérée des valeurs des premier et deuxième attributs au niveau du dispositif d'utilisateur (102) et une somme pondérée des valeurs respectives des premier et deuxième attributs au niveau du dispositif de commande vocale (104) ont une différence supérieure à des seuils respectifs de sorte que le dispositif d'utilisateur (102) soit configuré pour recevoir des commandes vocales et pour relayer les commandes vocales au dispositif de commande vocale (104),
dans lequel le premier attribut est une intensité de signal sans fil reçu et le deuxième attribut est une mesure de bruit de fond.

15. Dispositif de commande vocale (104) selon l'une quelconque des revendications 9 à 14, le dispositif de commande vocale (104) étant configuré pour recevoir une commande vocale dudit dispositif d'utilisateur (102) au format texte.
